# EUROPÄISCHE PATENTSCHRIFT

(11) **EP 2 144 797 B1**
(45) Veröffentlichungstag und Bekanntmachung des Hinweises auf die Patenterteilung: **13.04.2011**
(21) Anmeldenummer: 08716920.7
(22) Anmeldetag: 19.02.2008
(51) Int. Cl.: B60T 8/36, F16K 31/06

(54) **VENTILBAUGRUPPE**
VALVE ASSEMBLY
ENSEMBLE SOUPAPE

(30) Priorität: 10.03.2007 DE 102007011768; 12.09.2007 DE 102007043554
(43) Veröffentlichungstag der Anmeldung: 20.01.2010
(73) Patentinhaber: Continental Teves AG & Co. oHG, 60488 Frankfurt (DE)
(72) Erfinder: VOSS, Christoph, 60435 Frankfurt (DE)
(86) Internationale Anmeldenummer: PCT/EP2008/051960
(87) Internationale Veröffentlichungsnummer: WO 2008/110437

(56) Entgegenhaltungen:
- DE-A1- 2 208 183
- DE-A1- 2 928 611
- DE-A1- 4 031 885
- GB-A- 1 536 689
- US-B1- 6 684 901

## Beschreibung

Die Erfindung betrifft eine Ventilbaugruppe nach dem Oberbegriff des Patentanspruchs 1.

Zur Darstellung unterschiedlicher Ventilfunktionen werden in der Regel recht unterschiedliche Ventilbaugruppen mit speziell für die jeweilige Funktion konzipierten Komponenten entwickelt, was sich auf die Herstellkosten nachteilig auswirkt.

Aus DE 29 28 611 A1 ist bereits eine Ventilbaugruppe der gattungsbildenden Art bekannt, mit einem Elektromagneten, dessen Jochgehäuse und zugehöriger Magnetanker in zwei um jeweils 180 Winkelgrad zur Ventilachse veränderbaren Lagen ausrichtbar sind, um den Elektromagneten entweder in der Funktion einer stromlos geöffneten oder geschlossenen Ventilbaugruppe auf ein separat vom Elektromagneten im Ventilgehäuse angeordnetes Ventilschließglied einwirken zu lassen.

Ferner ist aus DE 40 31 885 A1 eine Ventilbaugruppe mit einem rohrförmigen Ventilgehäuse bekannt, in dem der Magnetanker in Verbindung mit einem Abstandsstück und einer Feder in der Ventilhubrichtung in zwei um 180 Winkelgrad veränderbare Lagen ausrichtbar sind, um den mit einem Ventilstößel zusammenwirkenden Magnetanker in Richtung auf einen im Ventilgehäuse ausgebildeten Ventilsitzkörper in der Ventilschließ- oder Ventiloffenstellung zu positionieren.

Daher ist es die Aufgabe der vorliegenden Erfindung, eine Ventilbaugruppe der angegebenen Art weiter zu entwickeln, die möglichst kostengünstig herstellbar ist.

Diese Aufgabe wird erfindungsgemäß für eine Ventilbaugruppe der angegebenen Art mit den kennzeichnenden Merkmalen des Patentanspruchs 1 gelöst.

Weitere Merkmale und Vorteile der Erfindung gehen im Folgenden aus der Beschreibung mehrerer Ausführungsbeispiele hervor.

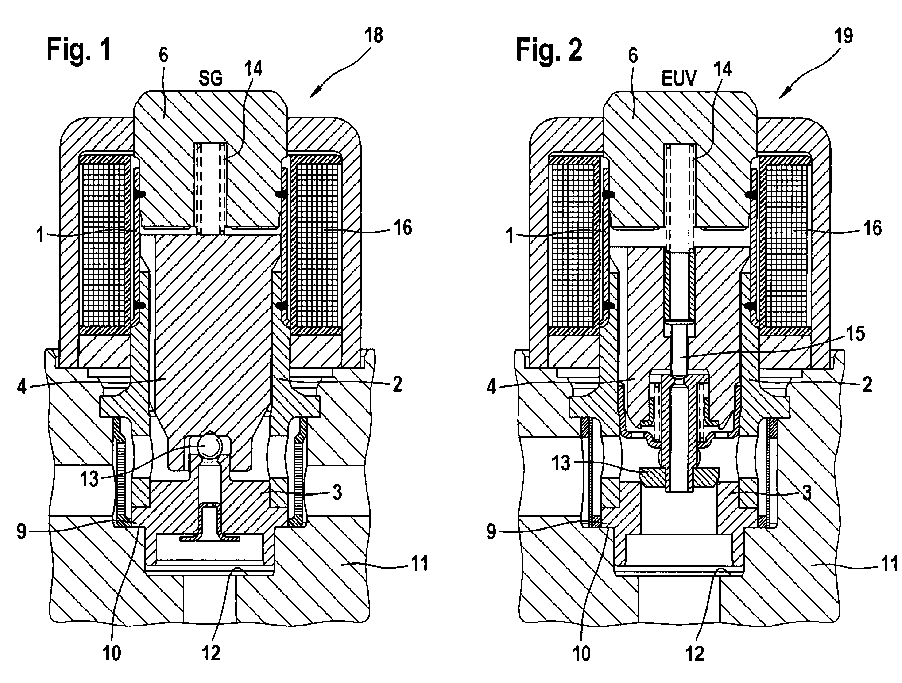

Anhand den Figuren 1- 4 sind in ihrer Funktion vier unterschiedliche Ventilbaugruppen dargestellt, welche jeweils zum Verbinden oder Trennen von Druckmittelkanälen in einem Ventilgehäuse ein mit einem Magnetanker 4 zusammenwirkendes Ventilschließglied 13 aufweisen, das auf einen Ventilsitz gerichtet ist, der an einem im Ventilgehäuse befestigten Ventilsitzkörper 3 angeordnet ist. Ferner weist jede Ventilbaugruppe eine Magnetspule 16 zur Betätigung des Magnetankers 4 auf, die auf einem nicht magnetisierbaren Hülsenabschnitt 1 des Ventilgehäuses aufgeschoben ist. Diametral zum Magnetanker 4 befindet sich jeweils ein im Ventilgehäuse eingesetzter Magnetkern 5, der je nach Ventilfunktion entweder als Verschlussstopfen 6 am Ende des Ventilgehäuses eingefügt ist, oder innerhalb des Ventilgehäuses zwischen dem Magnetanker 4 und dem Ventilsitzkörper 3 positioniert ist. Entsprechend der Darstellung sind alle abgebildeten Ventilbaugruppen in Patronenbauweise ausgeführt und in einem blockförmigen Ventilaufnahmekörper 11 mittels einer Außenverstemmung des Blockmaterials in Richtung auf einen am Ventilgehäuse (Rohrkörper 2) vorgesehenen Bund befestigt.

Losgelöst von den jeweiligen Einzelhei-ten der in den Figuren 1- 4 abgebildeten Ventilbaugruppen, die in Fahrdynamikregelsystemen zum Einsatz gelangen, sieht die Erfindung generell vor, dass unterschiedliche Ventilfunktionen unter Verwendung möglichst vieler identischer Ventilbauteile nach Art eines Baukastenprinzips darstellbar sind. Dies führt zu einer signifikanten Reduzierung der Herstellkosten bei gleichzeitiger Wahrung der Multifunktionalität aller Ventilbaugruppen.

Daher werden mit Blick auf den Einsatz vielfältiger Ventilbaugruppen in Fahrdynamikregelsystemen für alle erforderlichen Ventilfunktionen als identische Ventilbauteile universell verwendbare Ventilgehäusebauteile 1, 2 verwendet, innerhalb denen der Magnetanker 4, der Magnetkern 5 und der Ventilsitzkörper 3 entsprechend den Beispielen in den Figuren 1-4 angeordnet sind.

Für eine möglichst kostengünstige Darstellung der unterschiedlichen Ventilfunktionen weisen die identischen Ventilgehäusebauteile 1, 2 einen einheitlichen Innen- und Außendurchmesser sowie eine konstante Länge auf, weshalb die identischen Ventilgehäusebauteile für alle abgebildeten Ventilbaugruppen jeweils aus dem dünnwandigen, nicht magnetisierbaren Hülsenabschnitt 1 und einem dickwandigen, magnetisierbaren Rohrkörper 2 bestehen, wobei zur Aufnahme des Magnetankers 4 und des Magnetkerns 5 im Ventilgehäuse der Auβendurchmesser des Magnetankers 4 und der Außendurchmesser des Magnetkerns 5 in Abhängigkeit der gewünschten Ventilfunktion an den Innendurchmesser der Ventilgehäusebauteile 1, 2 angepasst ist.

Hierbei ist das dem Rohrkörper 2 zugewandten Ende des Hülsenabschnitts 1 mit seinem Innenumfang kraft- als auch stoffschlüssig mittels einer Schweißverbindung an dem Außenumfang des Rohrkörpers 2 abschnittsweise überlappend befestigt und wobei das vom Rohrkörper 2 abgewandten Ende des Hülsenabschnitts 1 ebenso kraftschlüssig mittels einer Pressverbindung als auch stoffschlüssig mittels einer Schweißverbindung am Außenumfang eines magnetisierbaren, universell für unterschiedliche Ventilgrundfunktionen verwendbaren Verschlussstopfens 6 befestigt ist.

Die Außenkontur des Verschlussstopfens 6, insbesondere der Außendurchmesser und die Länge, sind jeweils unabhängig von der jeweils angestrebten Ventilfunktion konstant, während die Innenkontur des Verschlussstopfens 6 an die jeweilige zu realisierende Ventilfunktion angepasst ist.

Hieraus folgt, dass der Verschlussstopfen 6 zur Darstellung der Ventilfunktion einer im elektromagnetisch nicht erregten Zustand geschlossenen Ventilbaugruppe als Magnetpol dickwandig ausgeführt ist, wozu auf die Figuren 1 und 2 verwiesen wird.

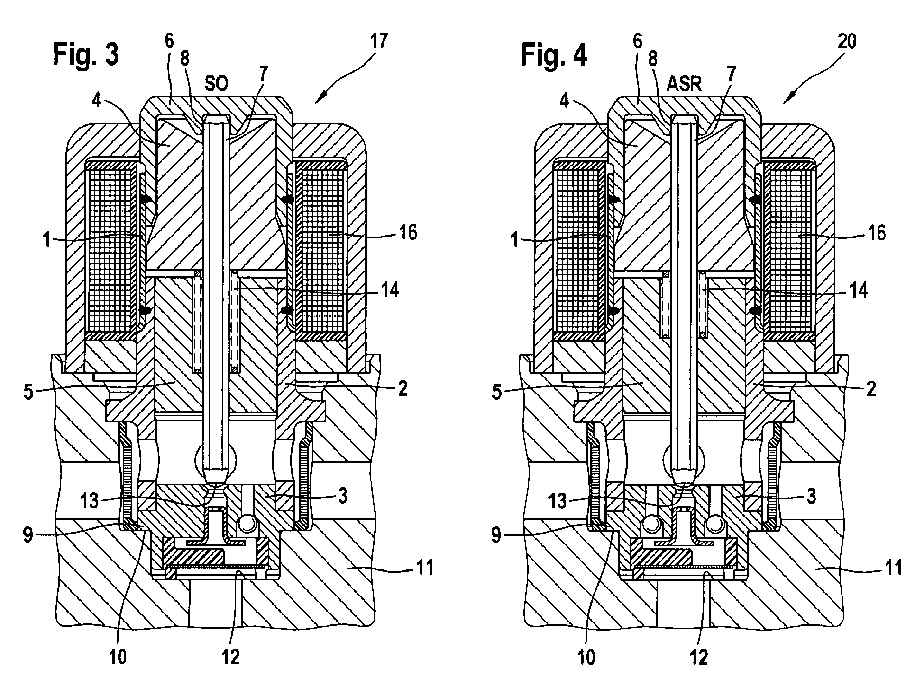

Die Figuren 3 und 4 zeigen hingegen zwei Ventilbaugruppen, bei denen der Verschlussstopfen 6 jeweils zur Darstellung der Ventilfunktion eines im elektromagnetisch nicht erregten Zustand geöffneten Ventils in der Innenkontur möglichst dünnwandig, vorzugsweise in Form einer Kappe ausgebildet ist, in welcher der Magnetanker 4 vorteilhaft eintauchbar ist. Am Boden der Kappe ist jeweils eine Lagerstelle 8 ausgebildet, in der ein am Magnetanker 4 hervorstehender Stößel 7 präzise geführt ist, womit auch der Magnetanker 4 an seinem einen Ende präzise innerhalb des Hülsenabschnitts 1 präzise zentriert ist.

Ein weiterer Beitrag zur baulichen Vereinheitlichung aller funktional unterschiedlichen Ventilbaugruppen liefert der Ventilsitzkörper 3, der ebenso wie die Ventilgehäusebauteile 1, 2 als ein universell verwendbares Einpressteil ausgebildet ist, um sämtliche angestrebten unterschiedlichen Ventilfunktionen realisieren zu können. Hierzu weist die Außenkontur des Ventilsitzkörpers 3 zur Begrenzung und Einhaltung der Einpresstiefe im Rohrkörper 2 einen Bund 9 auf, der sich an dem vom Hülsenabschnitt 1 abgewandten Ende des Rohrkörpers 2 bevorzugt an einer Gehäusestufe 10 eines Ventilaufnahmekörpers 11 abstützt. In dem vom Hülsenabschnitt 1 abgewandten Endbereich des Rohrkörpers 2 ist der Ventilsitzkörper 3 flüssigkeitsdicht eingepresst, dessen aus dem Rohrkörper 2 hervorstehender Vorsprung eine mit mehreren Rillen oder mit einer Sägezahnstruktur versehene Radialdichtfläche aufweist, die in jeweils einer gestuften Ventilaufnahmebohrung 12 des Ventilaufnahmekörpers 11 flüssigkeitsdicht einsetzbar ist.

Für alle abgebildeten Ausführungsformen gilt, dass zwecks Minimierung der Herstellkosten der Magnetanker 4 und der Magnetkern 5 als Kaltschlag- oder Fließpressteil und der Hülsenabschnitt 1 als Tiefziehteil ausgebildet sind, während der Rohrkörper 2 jeweils aus einem Kaltschlag- oder Drehteil hergestellt ist.

Infolge der Verwendung identischer Ventilbauteile und des damit nahezu identischen Montageprozesses für alle herzustellenden, funktional unterschiedlichen Ventilbaugruppen lassen sich die bisher erforderlichen Fertigungslinien vereinfachen und dennoch sehr flexibel nutzen, da bereits auf einer einzigen Fertigungslinie ohne nennenswerten Mehraufwand sämtliche unterschiedlichen Ventilbaugruppen herstellen lassen.

Sämtliche in den Figuren 1-4 abgebildeten Ventilbaugruppen sind derart ausgeführt, dass infolge des magnetisierbaren Verschlussstopfens 6 keine Schwächung des Magnetkreises eintritt, da das Jochteil der Magnetspule unmittelbar den Verschlussstopfen 6 kontaktiert und die am Jochteil anliegende Magnetscheibe unmittelbar am magnetisierbaren Rohrkörper 2 anliegt. Infolge des für alle Ventilbaugruppen identischen Ventilgehäuses kann eine einzige Magnetspule 16 mit dem zugehörigen Jochteil und der zugehörigen Magnetscheibe 17 für alle funktional unterschiedlichen Ventilbaugruppen verwendet werden.

Soweit bisher noch nicht auf alle weiteren in den Figuren 1-4 abgebildeten Einzelheiten eingegangen wurde, erfolgt nunmehr ihre Darstellung.

Die Figur 1 zeigt im Längsschnitt eine Ventilbaugruppe in Form eines 2/2-Wegesitz-Elektromagnetventils, das seine elektromagnetisch stromlos geschlossene Schaltstellung einnimmt, in der das Ventilschließglied 13 am Ventilsitz verharrt. Diese Ventilgrundstellung kommt durch eine zwischen dem Magnetanker 4 und dem Verschlussstopfen 6 angeordneten Druckfeder 14 zustande, die abschnittsweise innerhalb einer Sackbohrung des Verschlussstopfens 6 aufgenommen ist. Im elektromagnetisch erregten Zustand kommt der Magnetanker 4 an dem als Magnetpol wirksamen Verschlussstopfen 6 zur Anlage, sodass das Ventilschließglied 13 vom Ventilsitz abgehoben ist. Die vorgestellte Ventilbaugruppe wird als Auslassventil stromabwärts zur Radbremse eines Fahrdynamikregelsystems eingesetzt.

Die Figur 2 zeigt im Längsschnitt eine Ventilbaugruppe in Form eines Elektromagnetventils, das seine elektromagnetisch stromlos geschlossene Schaltstellung einnimmt, in der beide in Reihe angeordneten Ventilschließglieder 13,15 an ihren Ventilsitzen verharren. Auch diese Ventilgrundstellung kommt durch eine zwischen dem Magnetanker 4 und dem Verschlussstopfen 6 angeordneten Druckfeder 14 zustande, die abschnittsweise innerhalb einer Sackbohrung des Verschlussstopfens 6 aufgenommen ist. Im elektromagnetisch erregten Zustand kommt der Magnetanker 4 an dem als Magnetpol wirksamen Verschlussstopfen 6 zur Anlage, wodurch beide Ventilschließglieder 13, 15 nacheinander in einer Zweistufenfunktion von ihren Ventilsitzen abheben und nacheinander unterschiedliche Durchlassquerschnitte innerhalb einer Vorsteuer- und Hauptventilstufe im Ventilgehäuse ermöglichen. Die vorgestellte Ventilbaugruppe wird als elektromagnetisch vorgesteuertes Umschaltventil (Zweistufenventil) zwischen einer Rückförderpumpe und einem Hauptbremszylinder eines Fahrdynamikregelsystems eingesetzt.

Die Figur 3 zeigt im Längsschnitt eine Ventilbaugruppe in Form eines Elektromagnetventils, das seine elektromagnetisch stromlos geöffnete Schaltstellung einnimmt, in der das Ventilschließglied 13 vom Ventilsitz abgehoben ist. Diese Ventilgrundstellung kommt durch eine zwischen dem Magnetanker 4 und dem Magnetkern 5 angeordneten Druckfeder 14 zustande, die abschnittsweise innerhalb einer Sackbohrung des Magnetkerns 5 aufgenommen ist. Im elektromagnetisch erregten Zustand kommt der Magnetanker 4 an dem Magnetkern 5 zur Anlage, sodass das am Stößel 7 angebrachte Ventilschließglied 13 am Ventilsitz anschlägt und die Druckmittelverbindung trennt. Der Magnetanker 4 ist zu beiden Seiten über den Stößel 7 innerhalb des Magnetkerns 5 und der Lagerstelle 8 des kappenförmigen Verschlussstopfens 6 präzise geführt. Der Ventilsitzkörper 3 nimmt in einer Bypassbohrung ein Rückschlagventil auf, das von einer mit einer Blende versehenen Anschlagscheibe teilweise überdeckt ist, sodass ein Herausfallen des Rückschlagventils vermieden ist. Die Blende ist ein Bestandteil eines Hülsenkörpers, der in eine Bohrung des Ventilsitzkörpers 3 eingepresst ist, welche an den Ventilsitz angrenzt. Die vorgestellte Ventilbaugruppe wird als Einlassventil stromaufwärts zur Radbremse eines Fahrdynamikregelsystems eingesetzt.

Schließlich zeigt die Figur 4 die bereits aus Figur 3 bekannte Ventilbaugruppe in einem prinzipiell identischem Aufbau, mit der Besonderheit, dass dieses Elektromagnetventil als ASR-Ventil zwischen dem Hauptbremszylinder und der Pumpendruckseite in die zum Einlassventil führenden Bremsleitungsabschnitt eines Fahrdynamikregelventils eingesetzt wird.

### Bezugszeichenliste

- 1: Hülsenabschnitt
- 2: Rohrkörper
- 3: Ventilsitzkörper
- 4: Magnetanker
- 5: Magnetkern
- 6: Verschlussstopfen
- 7: Stößel
- 8: Lagerstelle
- 9: Bund
- 10: Gehäusestufe
- 11: Ventilaufnahmekörper
- 12: Ventilaufnahmebohrung
- 13: Ventilschließglied
- 14: Druckfeder
- 15: Ventilschließglied
- 16: Magnetspule

## Patentansprüche

1. Ventilbaugruppe, welche zum Verbinden oder Trennen von Druckmittelkanälen in einem Ventilgehäuse (1, 2) ein mit einem Magnetanker (4) zusammenwirkendes Ventilschließglied (13) aufnimmt, das auf einen Ventilsitz gerichtet ist, der an einem im Ventilgehäuse (1, 2) befestigten Ventilsitzkörper (3) angeordnet ist, mit einer Magnetspule (16) zur Betätigung des Magnetankers (4), die auf dem Ventilgehäuse aufgeschoben ist, sowie mit einem diametral zum Magnetanker (4) im Ventilgehäuse (1, 2) eingesetzten Magnetkern (5), wobei unterschiedliche, im elektromagnetisch nicht erregten Zustand der Ventilbaugruppe entweder geschlossene oder geöffnete Ventilfunktionen unter Verwendung identischer Ventilbauteile nach Art eines Baukastenprinzips aus universell verwendbaren Ventilgehäusebauteilen (1, 2) gebildet sind, die für die Darstellung der unterschiedlichen Ventilfunktionen einen einheitlichen Innen- und Außendurchmesser sowie eine konstante Länge aufweisen und die aus einem dünnwandigen, nicht magnetisierbaren Hülsenabschnitt (1) und einem dickwandigen, magnetisierbaren Rohrkörper (2) bestehen, wobei zur Aufnahme des Magnetankers (4) und des Magnetkerns (5) im Ventilgehäuse (1, 2) der Außendurchmesser des Magnetankers (4) und der Außendurchmesser des Magnetkerns (5) in Abhängigkeit der gewünschten Ventilfunktion an den Innendurchmesser der Ventilgehäusebauteile (1, 2) angepasst ist, **dadurch gekennzeichnet, dass** das dem Rohrkörper (2) zugewandte Ende des Hülsenabschnitts (1) mit seinem Innenumfang kraft- und/oder stoffschlüssig den Außenumfang des Rohrkörpers (2) abschnittsweise überlappend befestigt ist, und dass das vom Rohrkörper (2) abgewandten Ende des Hülsenabschnitts (1) kraft- und/oder stoffschlüssig am Außenumfang eines magnetisierbaren, universell für unterschiedliche Ventilfunktionen verwendbaren Verschlussstopfens (6) befestigt ist.

2. Ventilbaugruppe nach Anspruch 1, **dadurch gekennzeichnet, dass** die Außenkontur des Verschlussstopfens (6), insbesondere der Außendurchmesser und die Länge, für unterschiedliche Ventilfunktionen konstant ist, während die Innenkontur des Verschlussstopfens (6) an die jeweilige zu realisierende Ventilfunktion angepasst ist.

3. Ventilbaugruppe nach Anspruch 2, **dadurch gekennzeichnet, dass** der Verschlussstopfen (6) zur Darstellung der Ventilfunktion eines im elektromagnetisch nicht erregten Zustand geschlossenen Ventils als Magnetpol dickwandig ausgeführt ist.

4. Ventilbaugruppe nach Anspruch 2, **dadurch gekennzeichnet, dass** der Verschlussstopfen (6) zur Darstellung der Ventilfunktion eines im elektromagnetisch nicht erregten Zustand geöffneten Ventils in der Innenkontur dünnwandig, vorzugsweise in Form einer Kappe ausgebildet ist, in welcher der Magnetanker (4) eintauchbar ist.

5. Ventilbaugruppe nach Anspruch 4, **dadurch gekennzeichnet, dass** am Boden der Kappe eine Lagerstelle (8) ausgebildet ist, in der ein am Magnetanker (4) hervorstehender Stößel (7) geführt ist.

6. Ventilbaugruppe nach Anspruch 1, **dadurch gekennzeichnet, dass** der Ventilsitzkörper (3) als ein unabhängig von den unterschiedlichen Ventilfunktion universell verwendbares Einpressteil ausgebildet ist, dessen Außenkontur zur Begrenzung und Einhaltung der Einpresstiefe im Rohrkörper (2) einen Bund (9) aufweist, der sich an dem vom Hülsenabschnitt (1) abgewandten Ende des Rohrkörpers (2) bevorzugt an einer Gehäusestufe (10) eines Ventilaufnahmekörpers (11) abstützt.

7. Ventilbaugruppe nach einem der vorangegangenen Ansprüche, **dadurch gekennzeichnet, dass** der Magnetanker (4) und der Magnetkern (5) als Kaltschlag- oder Fließpressteil und der Hülsenabschnitt (1) als Tiefziehteil ausgebildet sind.

8. Ventilbaugruppe nach Anspruch 1, **dadurch gekennzeichnet, dass** der Rohrkörper (2) aus einem Kaltschlag- oder Drehteil hergestellt ist.

9. Fahrdynamikregelsystem mit einer Ventilbaugruppe nach einem der vorangegangenen Ansprüche 1-8, **gekennzeichnet durch** mehrere Ventilbaugruppen unterschiedlicher Funktion, die in mehreren Ventilreihen eines Ventilaufnahmekörpers (11) unter Verwendung identischer Ventilbauteile in mehreren Ventilaufnahmebohrungen (12) angeordnet sind.

10. Fahrdynamikregelsystem nach Anspruch 9, **dadurch gekennzeichnet, dass** in einer ersten Ventilreihe des Ventilaufnahmekörpers (11) eine erste Ventilbaugruppe die Funktion eines in Grundstellung elektrisch stromlos geöffneten Einlassventils (17) übernimmt, sowie in einer zweiten Ventilreihe eine zweite Ventilbaugruppe die Funktion eines in Grundstellung elektrisch stromlos geschlossenen Auslassventils (18) übernimmt, und dass in einer dritten Ventilreihe eine dritte Ventilbaugruppe die Funktion eines in Grundstellung elektrisch stromlos geöffneten Antriebsschlupfregelventils (20) übernimmt, deren aus dem Hülsenabschnitt (1) und dem Rohrkörper (2) bestehenden Ventilgehäusebauteile identisch ausgeführt sind.

11. Fahrdynamikregelsystem nach Anspruch 10, **dadurch gekennzeichnet, dass** in der dritten Ventilreihe eine dritte Ventilbaugruppe die Funktion eines in Grundstellung elektrisch stromlos geschlossenen Zweistufenventils (19) übernimmt, dessen aus dem Hülsenabschnitt (1) und dem Rohrkörper (2) bestehenden Ventilgehäusebauteile identisch zu den übrigen Ventilbaugruppen ausgeführt sind.

## Claims

1. Valve assembly which houses a valve-closing member (13) that cooperates with an armature (4) to connect or separate pressure medium channels in a valve housing (1, 2), which valve-closing member (13) is directed towards a valve seat which is arranged on a valve seat body (3) fixed on the valve housing (1, 2), with a solenoid (16) for actuating the armature (4), which solenoid is fitted onto the valve housing, and with a magnetic core (5) which is inserted in the valve housing (1, 2) diametrically opposite the armature (4), different valve functions, either closed or open in the electromagnetically non-excited state of the valve assembly, being formed by universally applicable valve housing components (1, 2) with the use of identical valve components in a modular manner, which valve housing components (1, 2) have a standardized internal and external diameter and a constant length for performing different valve functions and which valve housing components consist of a thin-walled, non-magnetizable sleeve section (1) and a thick-walled, magnetizable tubular body (2), the external diameter of the armature (4) and the external diameter of the magnetic core (5) being adapted to the internal diameter of the valve housing components (1, 2) in dependence on the desired valve function, in order to accommodate the armature (4) and the magnetic core (5) in the valve housing (1, 2), **characterized in that** the end of the sleeve section (1) oriented towards the tubular body (2) is fastened by its internal circumference non-positively and/or by a material joint to the external circumference of the tubular body (2) with zonal overlap and **in that** the end of the sleeve section (1) oriented away from the tubular body (2) is fastened non-positively and/or by a material joint to the outer circumference of a magnetizable closing plug (6) which is universally usable for different valve functions.

2. Valve assembly according to Claim 1, **characterized in that** the external contour of the closing plug (6), in particular its external diameter and length, is constant for different valve functions, while the internal contour of the closing plug (6) is adapted to the valve function to be achieved in each case.

3. Valve assembly according to Claim 2, **characterized in that** the closing plug (6) has a thick-walled configuration as a magnetic pole in order to perform the valve function of a valve which is closed in the electromagnetically non-excited state.

4. Valve assembly according to Claim 2, **characterized in that** the closing plug (6) has in its internal contour a thin-walled configuration, preferably in the form of a cap into which the armature (4) is insertable, in order to perform the valve function of a valve which is open in the electromagnetically non-excited state.

5. Valve assembly according to Claim 4, **characterized in that** a bearing (8) in which a plunger (7) projecting from the armature (4) is guided is formed on the base of the cap.

6. Valve assembly according to Claim 1, **characterized in that** the valve seat body (3) is in the form of a pressed-in part which is universally applicable independently of the different valve functions, the external contour of which pressed-in part has a collar (9) for limiting and maintaining the pressed-in depth in the tubular body (2), which collar preferably bears against a housing step (10) of a valve-receiving body (11) at the end of the tubular body (2) oriented away from the sleeve section (1).

7. Valve assembly according to any one of the preceding claims, **characterized in that** the armature (4) and the magnetic core (5) are configured as cold-formed or extruded parts and the sleeve section (1) as a deep-drawn part.

8. Valve assembly according to Claim 1, **characterized in that** the tubular body (2) is produced from a cold-formed or turned part.

9. Driving dynamics control system with a valve assembly according to any one of the preceding Claims 1-8, **characterized by** a plurality of valve assemblies with different functions which are arranged in a plurality of valve series of a valve-receiving body (11), identical valve components being used in a plurality of valve-receiving bores (12).

10. Driving dynamics control system according to Claim 9, **characterized in that** in a first valve series of the valve-receiving body (11) a first valve assembly assumes the function of an inlet valve (17) which is open in its electrically currentless base position, and in the second valve series a second valve assembly assumes the function of an outlet valve (18) which is closed in its electrically currentless base position, and **in that** in a third valve series a third valve assembly assumes the function of a drive-slip control valve (20) which is open in its electrically currentless base position, the valve housing components of which drive-slip control valve (20), consisting of the sleeve section (1) and the tubular body (2), are configured identically.

11. Driving dynamics control system according to Claim 10, **characterized in that** in the third valve series a third valve assembly assumes the function of a two-stage valve (19) which is closed in its electrically currentless base position and the valve housing components of which, consisting of the sleeve section (1) and the tubular body (2), are configured identically to the other valve assemblies.

## Revendications

1. Module de soupape qui loge dans une cage de soupape (1, 2) un élément (13) de fermeture de soupape coopérant avec un induit magnétique (4) pour raccorder ou bloquer des canaux à fluide sous pression,
l'élément de fermeture de soupape étant dirigé vers un siège de soupape disposé sur un corps (3) de siège de soupape fixé dans la cage de soupape (1, 2) et présentant une bobine magnétique (16) qui actionne l'induit magnétique (4) et qui est passée sur la cage de soupape ainsi qu'un noyau magnétique (5) inséré dans la cage de soupape (1, 2) diamétralement par rapport à l'induit magnétique (4),
différentes fonctions de fermeture ou d'ouverture de soupape lorsque le module de soupape est à l'état non électromagnétiquement excité étant formées de composants de cage de soupape (1, 2) utilisables universellement en recourant à des composants de soupape identiques montés selon un principe modulaire,
les composants prévus pour constituer les différentes fonctions de soupape présentant un diamètre intérieur et un diamètre extérieur unitaires ainsi qu'une longueur constante et étant constitués d'une partie de douille (1) à paroi mince non magnétisable et d'un corps tubulaire (2) à paroi épaisse magnétisable, le diamètre extérieur de l'induit magnétique (4) et le diamètre extérieur du noyau magnétique (5) étant adaptés selon la fonction de soupape souhaitée au diamètre intérieur des composants (1, 2) de la cage de soupape de manière à reprendre l'induit magnétique (4) et le noyau magnétique (5) dans la cage de soupape (1, 2),
**caractérisé en ce que**
l'extrémité de la partie en douille (1) tournée vers le corps tubulaire (2) est fixée par sa périphérie intérieure en recouvrant partiellement la périphérie extérieure du corps tubulaire (2) en correspondance mécanique et/ou en correspondance de matière et
**en ce que** l'extrémité de la partie en douille (1) non tournée vers le corps tubulaire (2) est fixée en correspondance mécanique et/ou en correspondance de matière à la périphérie extérieure d'un bouchon de fermeture (6) magnétisable et apte à être utilisé universellement pour différentes fonctions de soupape.

2. Module de soupape selon la revendication 1, **caractérisé en ce que** le contour extérieur du bouchon de fermeture (6), en particulier son diamètre extérieur et sa longueur, est constant pour différentes fonctions de soupape, tandis que le contour intérieur du bouchon de fermeture (6) est adapté à la fonction de soupape particulière à réaliser.

3. Module de soupape selon la revendication 2, **caractérisé en ce que** pour former la fonction de soupape d'une soupape fermée à l'état non excité électromagnétiquement, le bouchon de fermeture (6) est configuré comme pôle magnétique à paroi épaisse.

4. Module de soupape selon la revendication 2, **caractérisé en ce que**, pour former la fonction de soupape d'une soupape ouverte à l'état électromagnétiquement non excité, le bouchon de fermeture (6) est configuré de préférence sous la forme d'un capuchon dans lequel l'induit magnétique (4) peut être enfoncé et dont le contour intérieur présente une paroi mince.

5. Module de soupape selon la revendication 4, **caractérisé en ce qu'**un emplacement de montage (8) dans lequel un poussoir (7) qui déborde de l'induit magnétique (4) est guidé est formé au fond du capuchon.

6. Module de soupape selon la revendication 1, **caractérisé en ce que** le corps (3) de siège de soupape est configuré comme pièce d'enfoncement utilisable universellement indépendamment des différentes fonctions de soupape et dont le contour extérieur présente pour limiter et respecter la profondeur d'enfoncement dans le corps tubulaire (2) un collet (9) qui s'appuie sur l'extrémité du corps tubulaire (2) non tournée vers la partie en douille (1) et de préférence sur un gradin (10) du boîtier d'un corps (11) de logement de soupape.

7. Module de soupape selon l'une des revendications précédentes, **caractérisé en ce que** l'induit magnétique (4) et le noyau magnétique (5) sont configurés comme pièces forgées à froid ou extrudées et **en ce que** la partie en douille (1) est configurée comme pièce emboutie.

8. Module de soupape selon la revendication 1, **caractérisé en ce que** le corps tubulaire (2) est constitué d'une pièce forgée à froid ou tournée.

9. Système de régulation de la dynamique de roulage doté d'un module de soupape selon l'une des revendications 1 à 8 qui précèdent, **caractérisé par** plusieurs modules de soupape exerçant des fonctions différentes, disposés en plusieurs séries de soupapes d'un corps (11) de logement de soupape en recourant à des composants de soupape identiques dans plusieurs alésages (12) de logement de soupape.

10. Système de régulation de la dynamique de roulage selon la revendication 9, **caractérisé en ce qu'**un premier module de soupape assure la fonction d'une soupape d'admission (17) dont la position de base est ouverte en l'absence de courant électrique et disposé dans une première rangée de soupapes du corps (11) de logement de soupapes, **en ce qu'**un deuxième module de soupape qui assure la fonction d'une soupape d'échappement (18) dont la position de base est fermée en l'absence de courant électrique est disposé dans une deuxième rangée de soupapes et **en ce qu'**un troisième module de soupape assure la fonction d'une soupape (20) de régulation du patinage d'entraînement dont la position de base est ouverte en l'absence d'un courant électrique est disposé dans une troisième rangée de soupapes, les composants de logement de soupape constitués de la partie en douille (1) et du corps tubulaire (2) étant identiques.

11. Système de régulation de la dynamique de roulage selon la revendication 10, **caractérisé en ce que** dans la troisième série de soupapes, un troisième module de soupape assure la fonction d'une soupape (19) à deux étages dont la position de base est fermée en l'absence de courant électrique et dont les composants de cage de soupape constitués de la partie en douille (1) et du corps tubulaire (2) sont identiques aux autres modules de soupape.
